(19) Europäisches Patentamt
European Patent Office
Office européen des brevets

(11) Veröffentlichungsnummer: **0 143 106**
**B1**

(12) **EUROPÄISCHE PATENTSCHRIFT**

(45) Veröffentlichungstag der Patentschrift: **06.04.88**

(51) Int. Cl.⁴: **C 10 J 3/02**

(21) Anmeldenummer: **84890210.2**

(22) Anmeldetag: **08.11.84**

(54) **Verfahren zur Aufarbeitung von schwermetallhältigen Rückständen der chemischen Industrie.**

(30) Priorität: **14.11.83 AT 3997/83**
**24.09.84 AT 3021/84**

(43) Veröffentlichungstag der Anmeldung:
**29.05.85 Patentblatt 85/22**

(45) Bekanntmachung des Hinweises auf die Patenterteilung:
**06.04.88 Patentblatt 88/14**

(84) Benannte Vertragsstaaten:
**BE CH DE FR GB IT LI LU NL SE**

(56) Entgegenhaltungen:
**EP-A-0 011 887**
**WO-A-83/01626**
**DD-A-74 071**
**DE-A-3 206 984**
**DE-C-573 112**
**DE-C-882 283**
**FR-A-2 104 443**

(73) Patentinhaber: **VOEST- ALPINE Aktiengesellschaft, Muldenstrasse 5, A-4020 Linz (AT)**

(72) Erfinder: **Der Erfinder hat auf seine Nennung verzichtet**

(74) Vertreter: **Wolfram, Gustav, Dipl.- Ing., Schwindgasse 7 P.O. Box 205, A-1041 Wien (AT)**

**EP 0 143 106 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft ein Verfahren zur Aufarbeitung schwermetallhältiger Rückstände der chemischen Industrie, insbesondere von Hydrierrückständen.

Ein Problem der chemischen Industrie, insbesondere der petrochemischen Industrie, stellt die umweltfreundliche Aufarbeitung bzw. Verwertung schwermetallhältiger Rückstände, wie sie beispielsweise beim Raffinieren von Schweröl und bei der Schwerölhydrierung anfallen, dar. Ein ebensolches Problem stellt sich bei der Verarbeitung von Altöl.

Es ist bekannt, solche Rückstände in einem Kraftwerk zu verbrennen, wobei jedoch die anfallenden Schwermetalle, die mit den Rauchgasen und mit der Asche ausgeschieden werden, eine Belastung für die Umwelt darstellen. Es kommt zu unzulässig hohen Schwermetallanteilen in den Abgasen und im Abwasser.

Die Erfindung stellt sich die Aufgabe, ein wirtschaftliches und zugleich umweltfreundliches Verfahren zur Aufarbeitung der schwermetallhältigen Rückstände zu schaffen, bei dem die Schwermetalle in wasserunlösliche deponiefähige Form übergeführt werden, und gleichzeitig der Wärmeinhalt der Rückstände energetisch nutzbar gemacht wird.

Diese Aufgabe wird erfindungsgemäß dadurch gelöst, daß die schwermetallhältigen Rückstände in eine Primärgasreaktionszone eines mindestens ein Festbett aus kohlenstoffhältigem Material enthaltenden Schachtvergasers eingebracht werden, daß zusammen mit den Einsatzstoffen und/ oder zusammen mit den Festbettbildnern schlackenbildende Stoffe zur Aufnahme und Abbindung der Schwermetalle eingebracht werden, und daß die untere Zone des Festbettes auf eine Temperatur oberhalb der Schlacken- bzw. Ascheschmelztemperatur gehalten wird, wobei die Viskosität der Schlacke weniger als 10 Pa.s beträgt.

Schachtvergaser zur Durchführung des Verfahrens sind bekannt; sie weisen einen vertikalen Schacht, der die Sekundärgasreaktionszone darstellt, und eine etwa horizontal am unteren Ende des Schachtes anschließende Kammer, die die Primärgasreaktionszone bildet, auf. In die Primärgasreaktionszone mündet ein Brenner, mit dem die schwermetallhältigen Rückstände vergast werden. Der in der Sekundärgasreaktionszone eingebrachte kohlenstoffhältige Einsatz bildet in der Primärgasreaktionszone einen eine freie Oberfläche aufweisenden Schüttkegel, der im Schlackenbad fußt. Beim Vergasen der Rückstände werden die Schwermetalle zum überwiegenden Teil in die Schlacke eingeschmolzen und gemeinsam mit der Schlacke aus dem Schachtvergaser ausgetragen. Die im Schachtvergaser anfallende Schlacke fällt beim Austragen infolge Abschreckung mit Wasser als glasig erstarrtes Granulat an, welches die schädlichen Schwermetallbestandteile enthält. Infolge der glasigen Struktur der erstarrten Schlacke kann diese gefahrlos deponiert werden; wie festgestellt wurde, findet eine Auslaugung von Schwermetallverbindungen nicht statt.

Für die Aufarbeitung vanadinhältiger Rückstände werden zweckmäßig in die Sekundärgasreaktionszone zusätzlich basische schlackenbildende Stoffe, insbesondere CaO-hältige Stoffe, eingebracht.

Für die Aufarbeitung von eisenhältigen Rückständen wird vorteilhaft in die Sekundärgasreaktionszone Koks, insbesondere Hüttenkoks, eingebracht, wobei eine saure Schlacke mit mindestens 40 % $SiO_2$ gebildet wird.

Um einen möglichst geringen Anteil der Schwermetalle mit dem bei der Vergasung entstehenden Rohgas auszutragen, werden zweckmäßig eine oder mehrere der die Rußbildung in der Primärgasreaktionszone herabsetzenden Maßnahmen angewendet:

a) Zuführung eines sauerstoffhältigen Gases, um ein $C/O_2$-Verhältnis, gleich $\lambda$, von mindestens 0,45 bis 0,8, vorzugsweise 0,6, zu erhalten;

b) Einstellen eines Wasserstoff/Sauerstoff-Verhältnisses von mindestens 0,35 bis 0,7, vorzugsweise 0,5;

c) Einstellen der Verweilzeit des Primärgases in der Primärgasreaktionszone von 0,2 bis 1,5 sec, vorzugsweise 0,4 bis 0,6 sec und

d) Einstellen einer Verweilzeit des Sekundärgases in der Sekundärgasreaktionszone von 1 bis 6 sec, vorzugsweise 2 bis 3 sec.

Vorteilhaft werden die schlackenbildenden Zusatzstoffe, wie Kalkstein, in einer Körnung bis zu 20 mm verwendet.

Gemäß einer bevorzugten Ausführungsform wird das aus dem Schachtvergaser austretende Produktgas gefiltert und der ausgefilterte Staub der Primärgasreaktionszone zugeführt. Durch diese Maßnahme gelingt es, die Schwermetalle zur Gänze in der Schlacke abzuscheiden. Nur ein äußerst geringer Prozentsatz reichert sich in der feuerfesten Auskleidung des Schachtvergasers an.

Die Erfindung beschäftigt sich weiters mit der Verwertung von Klärschlamm. Der bei Klärung von Abwässern anfallende Klärschlamm enthält je nach Herkunft oft auch Schadstoffe, insbesondere Schwermetalle, die die Verwendung bzw. Aufarbeitung des Klärschlammes einschränken. Schwermetallhältiger Klärschlamm läßt sich nämlich nicht als Düngemittel verwenden, da es zu unerwünschten Schwermetall-Kontaminationen von Nahrungsstoffen kommen kann. Weiters ist schwermetallhältiger Klärschlamm nicht ohne weiteres zu Asche pyrolysierbar oder verbrennbar, da die Schwermetalle in den Abgasen und in der Asche in wasserlöslicher Form enthalten sind und eine Gefahr für die Umwelt darstellen.

Die Erfindung stellt sich die weitere Aufgabe, den Wärmeinhalt von Klärschlamm energetisch nutzbar zu machen, wobei im Klärschlamm eventuell enthaltene Schadstoffe, insbesondere Schwermetalle in wasserunlösliche, deponiefähige Form übergeführt werden.

Diese Aufgabe wird dadurch gelöst, daß als Einsatzstoff zusätzlich zu den schwermetallhältigen Rückständen Klärschlamm der Primärgasreaktionszone zugeführt wird, wobei zweckmäßig Klärschlamm in einer Menge von bis zu 30 % der Menge der scßwermetallhältigen Rückstände zugeführt wird.

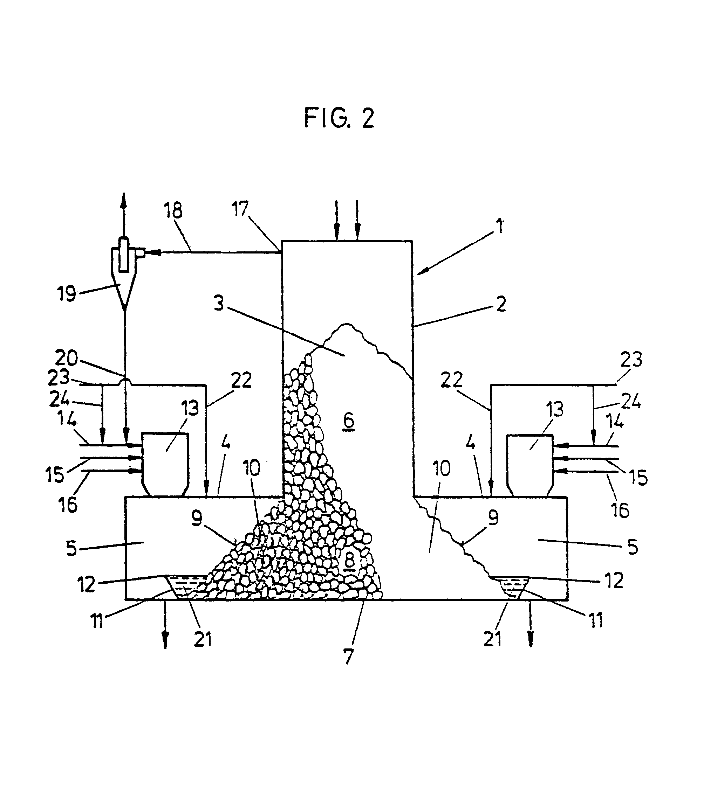

Vorzugsweise wird der Klärschlamm dem schwermetallhältigen Rückstand vor dessen Einspeisung zugemischt.
Es ist von Vorteil, wenn der Klärschlamm vor dem Einspeisen auf eine Restfeuchte von maximal 50 bis 60 % getrocknet wird.
Die Erfindung ist anhand der Zeichnung, deren Fig. 1 und 2 je einen Schachtvergaser gemäß unterschiedlichen Ausführungsformen in schematischer Darstellung zeigen, sowie anhand zweier Beispiele näher erläutert.
Der in Fig. 1 dargestellte Schachtvergaser 1 weist einen vertikalen oberen Abschnitt 2, der die Sekundärgasreaktionszone 3 bildet, und mindestens einen (im dargestellten Ausführungsbeispiel sind es zwei) seitlich abgewinkelten unteren Abschnitt 4, der die primärgasreaktionszone 5 darstellt, auf. In den oberen Abschnitt wird der stückige kohlenstoffhältige Schachteinsatz 6, wie z. B. Koks oder Kohle, gegebenenfalls gemeinsam mit separaten schlackenbildenden Stoffen von oben über eine nicht dargestellte Schleuse aufgegeben. Der stückige Einsatz bildet am Boden 7 des Schachtvergasers 1 ein Festbett 8 mit in die Primärgasreaktionszonen 5 ragenden, jeweils eine freie Oberfläche 9 aufweisenden Schüttkegeln 10. Diese Schüttkegel 10 münden jeweils in eine Schlackenwanne 11 mit Überlaufwehr 12.
An den seitlich abgewinkelten unteren Abschnitten 4 ist jeweils mindestens ein Brenner 13 angeordnet, der vorzugsweise als Zyklonbrenner ausgebildet ist und dem der zu verwertende Rückstand 14 als Brennstoff oder zusätzlich zum Brennstoff zugeführt wird. Zusätzlich wird über den Brenner 13 Dampf 15 und Sauerstoff 16 in die Primärgasreaktionszone 5 eingeleitet. Das aus dem oberen Teil der Sekundärgasreaktionszone 3 durch den Gasauslaß 17 austretende Produktgas 18 wird einem Trockenabscheider oder Naßwäscher 19 zugeleitet. Die aus dem Gas ausgeschiedenen Staubanteile 20 werden über einen der Brenner wieder dem Schachtvergaser 1 zugeführt.
Das erfindungsgemäße Verfahren ist nachfolgend anhand zweier Beispiele erläutert:

**Beispiel 1:**

Ein schwermetallhältiger Rückstand 14 (Vakuumrückstand) aus der Schwerölaufbereitung wurde in einer Menge von 300 kg/h und mit einer Temperatur von 200°C dem Brenner 13 zugeführt. Dieser Rückstand wies folgende Analyse (in Gew.-%) auf:

| C | H | O | N | S | $H_2O$ | Asche | V |
|---|---|---|---|---|---|---|---|
| 85,6 | 10,5 | 0,09 | 0,55 | 3,05 | 0,1 | 0,11 | 560 ppm |

Dem Brenner 13 wurde weiters Dampf 15 bis 18. $10^5$ Pa in einer Menge von 160 kg/ha zugeführt, welcher Dampf auf 24°C überhitzt war. Sauerstoff 16 wurde mit einer Temperatur von 70°C und in einer Menge von 380 $m^3/h$ unter Normalbedingungen eingeleitet (Reinheit 99,9 %, Rest N).
In die Sekundärgasreaktionszone 5 wurde als Einsatzstoff 6 und als schlackenbildender Stoff Hüttenkoks in einer Menge von 137 kg/h mit einer Temperatur von 20°C eingesetzt.
Siebanalyse des Hüttenkoks (in %):

| >40 mm | 40 - 20 mm | 20 - 10 mm | <10 mm |
|---|---|---|---|
| 15,2 | 82,6 | 0,9 | 1,3 |

Chemische Analyse des Hüttenkoks (Gew.-%):

| C | H | O | N | S | $H_2O$ | Asche |
|---|---|---|---|---|---|---|
| 82,68 | 0,22 | 0,28 | 0,62 | 0,53 | 4,5 | 11,17 mit 600 ppm V |

Das in der Primärgasreaktionszone entstehende Primärgas hatte eine Temperatur von 1770°C und fiel in einer Menge von 1099 $m^3/h$ unter Normalbedingungen (feucht) an. Seine Verweilzeit in der Primärgasreaktionszone betrug 0,3 sec. Es wies folgende chemische Zusammensetzung (N-frei gerechnet) auf (Gew.-%):

| $CO_2$ | $H_2$ | CO | $CH_4$ | $(COS + H_2S)$ |
|---|---|---|---|---|
| 22,2 | 26,1 | 50,7 | 0,0 | 1,0 |

Das aus der Sekundärgasreaktionszone 3 austretende Produktgas 18 (Rohgas bzw. Sekundärgas) fiel in einer Gasmenge von 1322 $m^3/h$ unter Normalbedingungen (feucht) an. Die Gastemperatur betrug 831°C, die Verweilzeit in der Sekundärvergasungszone 2 sec. Seine chemische Zusammensetzung (N-frei gerechnet) war wie folgt (Gew.-%):

| $CO_2$ | $H_2$ | CO | $CH_4$ | $(COS + H_2S)$ |
|---|---|---|---|---|
| 15,5 | 37,0 | 46,9 | 0,0 | 0,6 |

Die mit einer Temperatur von 1500°C und einer Viskosität von 8 Pa.s anfallende, über das Überlaufwehr 12 überlaufende, aus der Primärgasreaktionszone 5 ausfließende Schlacke 21 wurde mittels Druckwasser granuliert. In der Schlacke sind die Aschenanteile des kohlehältigen Einsatzes und des schwermetallhältigen Rückstandes eingeschmolzen, so daß die Schwermetalle, die in der Asche enthalten sind, ebenfalls in der Schlacke anfallen. Die Schlacke erstarrte glasig und fiel in einer Menge von 15,3 kg/h an.

Siebanalyse der Schlacke:

| >20 mm | 20 - 10 mm | 10 - 5 mm | 5 - 3 mm |
|---|---|---|---|
| 0,0 | 0,1 | 1,2 | 5,8 |

| 3 - 2 mm | 2 - 1 mm | 1 - 0,5 mm | <0,5 mm |
|---|---|---|---|
| 11,2 | 30,2 | 32,4 | 19,1 |

Chemische Analyse der Schlacke (Gew.-%):

| $Al_2O_3$ | $Fe_2O_3$ | FeO | Fe | $SiO_2$ | CaO | MgO |
|---|---|---|---|---|---|---|
| 25,0 | n.n. | 7,1 | 0,1 | 46,0 | 9,4 | 3,2 |

| $C_{ges}$ | $S_{ges}$ | $TiO_2$ | $Na_2O$ | $K_2O$ | $P_2O_5$ | V |
|---|---|---|---|---|---|---|
| 0,15 | 0,08 | 1,1 | 0,8 | 1,6 | 0,5 | 0,82 |

Der aus dem Rohgas 18 abgeschiedene Staub 20, der in einer Menge von 2,49 g/m$^3$ unter Normalbedingungen anfiel, wies einen Aschengehalt von 11,8 % auf, wobei sich in der Asche 12,4 Gew.-% V befanden.

Somit ergibt sich, daß die dem Schachtvergaser 1, u.zw. dessen Primärgasreaktionszone 5 und Sekundärgasreaktionszone 3, aufgegebene Vanadinmenge (177,18 g/h) in einer Menge von 125,46 g/h in der Schlacke anfiel, wogegen im Staub des Rohgases lediglich 48,17 g/h enthalten waren. Der Rest fand sich als Anreicherung in der feuerfesten Auskleidung des Schachtofens.

Bei dieser Vanadinbilanz ist nicht berücksichtigt, daß der Staub nach Austritt aus dem Schachtvergaser 1 der Primärgasreaktionszone 5 zugeführt wird, durch welche Maßnahme nahezu sämtliches Vanadin in der Schlacke eingeschmolzen anfällt. Bei einem Auslaugeversuch der erstarrten Schlacke mit $H_2O$ konnte im $H_2O$ kein V nachgewiesen werden.

**Beispiel 2:**

Ein schwermetallhältiger Rückstand 14 (Vakuumrückstand) aus der Schwerölauf bereitung wurde in einer Menge von 300 kg/h und mit einer Temperatur von 200°C dem Brenner 13 zugeführt. Dieser Rückstand wies folgende Analyse (in Gew.-%) auf:

| C | H | O | N | S | $H_2O$ | Asche | V |
|---|---|---|---|---|---|---|---|
| 85,6 | 10,5 | 0,09 | 0,55 | 3,05 | 0,1 | 0,11 | 560 ppm |

Dem Brenner 13 wurde weiters Dampf 15 mit 18 $10^5$Pa in einer Menge von 198 kg/h zugeführt, welcher Dampf auf 240°C überhitzt war. Sauerstoff 16 wurde mit einer Temperatur von 70°C und in einer Menge von 396 m$^3$/h unter Normalbedingungen eingeleitet (Reinheit 99,9 %, Rest N).

In die Sekundärgasreaktionszone 5 wurde als Einsatzstoff Hüttenkoks in einer Menge von 130 kg/h mit einer Temperatur von 20°C eingesetzt.

Siebanalyse des Hüttenkoks (in %):

| >40 mm | 40 - 20 mm | 21 - 10 mm | <10 mm |
|---|---|---|---|
| 15,2 | 82,6 | 0,9 | 1,3 |

Chemische Analyse des Hüttenkoks (Gew.-%):

| C | H | O | N | S | $H_2$ | Asche |
|---|---|---|---|---|---|---|
| 82,68 | 0,22 | 0,28 | 0,62 | 0,53 | 4,5 | 11,17 mit 600 ppm V |

Zur vermehrten Bildung einer basischen Schlacke wurde mit dem Hüttenkoks Kalkstein in einer Menge von 13 kg/h und einer Temperatur von 20°C eingebracht.

Chemische Analyse des Kalksteines:

| MgO | CaO | andere |
|---|---|---|
| 0,7 % | 59,0 % | 0,3 % |

Das in der Primärgasreaktionszone entstehende Primärgas hatte eine Temperatur von 1839° C und fiel in einer Menge von 1152 $m^3$/h unter Normalbedingungen (feucht) an. Seine Verweilzeit in der Primärgasreaktionszone betrug 0,28 sec. Es wies folgende chemische Zusammensetzung (N-frei gerechnet) auf (Gew.-%):

| $CO_2$ | $H_2$ | CO | $CH_4$ | ($COS + H_2S$) |
|---|---|---|---|---|
| 25,1 | 24,9 | 49,0 | 0,0 | 1,0 |

Das aus der Sekundärgasreaktionszone 3 austretende Produktgas 18 (Rohgas bzw. Sekundärgas) fiel in einer Gasmenge von 1364 $m^3$/h unter Normalbedingungen (feucht) an. Die Gastemperatur betrug 864° C, die Verweilzeit in der Sekundärvergasungszone 1,9 sec. Seine chemische Zusammensetzung (N-frei gerechnet) war wie folgt (Gew.-%):

| $CO_2$ | $H_2$ | CO | $CH_4$ | ($COS + H_2S$) |
|---|---|---|---|---|
| 18,7 | 36,9 | 43,8 | 0,0 | 0,6 |

Die mit einer Temperatur von 1300° C und einer Viskosität von 3 Pa.s anfallende, über das Überlaufwehr 12 überlaufende, aus der Primärgasreaktionszone ausfließende Schlacke 21 wurde mittels Druckwasser granuliert. Die Schlacke erstarrte glasig und fiel in einer Menge von 22,3 kg/h an.

Siebanalyse der Schlacke:

| >20 mm | 20 - 10 mm | 10 - 5 mm | 5 - 3 mm |
|---|---|---|---|
| 0,0 | 0,1 | 1,2 | 5,8 |

| 3 - 2 mm | 2 - 1 mm | 1 - 0,5 mm | <0,5 mm |
|---|---|---|---|
| 11,2 | 30,2 | 32,4 | 19,1 |

Chemische Analyse der Schlacke (Gew.-%):

| $Al_2O_3$ | $Fe_2O_3$ | FeO | Fe | $SiO_2$ | CaO | MgO |
|---|---|---|---|---|---|---|
| 16,0 | n.n. | 4,6 | 0,06 | 29,4 | 40,2 | 2,6 |

| $C_{ges}$ | $S_{ges}$ | $TiO_2$ | $Na_2O$ | $K_2O$ | $P_2O_5$ | V |
|---|---|---|---|---|---|---|
| 0, 2 | n.b. | n. b. | n.b. | n.b. | n.b. | 0,7 |

Der aus dem Rohgas 18 abgeschiedene Staub 20, der in einer Menge von 0,58 g/$m^3$ unter Normalbedingungen anfiel, wies einen Aschengehalt von 14,8 % auf, wobei sich in der Asche 13,6 Gew.-% V befanden.

Somit ergibt sich, daß die dem Schachtvergaser 1, u.zw. dessen Primärgasreaktionszone 5 und Sekundärgasreaktionszone 3, aufgegebene Vanadinmenge (176,7 g/h) in einer Menge von 156,24 g/h in der Schlacke anfiel, wogegen im Staub des Rohgases lediglich 15,92 g/h enthalten waren. Der Rest fand sich als Anreicherung in der feuerfesten Auskleidung des Schachtofens. Bei dieser Vanadinbilanz ist ebenso wie bei Beispiel 1 nicht berücksichtigt, daß der Staub nach Austritt aus dem Schachtvergaser 1 der Primärgasreaktions zone 5 zugeführt wird, durch welche Maßnahme nahezu sämtliches Vanadin in der Schlacke eingeschmolzen anfällt. Bei einem Auslaugeversuch der erstarrten Schlacke mit $H_2O$ konnte im $H_2O$ kein V nachgewiesen werden.

Mit dem erfindungsgemäßen Verfahren ist es möglich, V, Fe, Ni, Cr und andere Schwermetalle nahezu vollständig in die Schlacke einzuschmelzen. Es ist von besonderem Vorteil, eine Rußbildung in der Primärgasreaktionszone zu vermeiden, da der Ruß Schwermetalle aufnimmt.

Wie aus Fig. 2 ersichtlich, mündet gemäß einem weiteren Ausführungsbeispiel in die Primärgasreaktionszone 5 eine Zuführleitung 22, durch die Klärschlamm 23 mit einer Restfeuchte von maximal 50 bis 60 % zugeführt wird. Der Klärschlamm 23 kann auch über eine Zweigleitung 24, die in die die zu verwertenden Rückstände 14 zuführende Leitung mündet, vor Einspeisen der zu verwertenden Rückstände 14 mit diesen vermischt werden.

Der Klärschlamm 23 wird vorzugsweise in einer Menge von bis zu 30 % der Menge der zu verwertenden Rückstände 14 in die Primärgasreaktionszone 5 eingebracht.

In der glasig erstarrten Schlacke sind die Aschenanteile des kohlehältigen Einsatzes, des schwermetallhältigen Rückstandes und des Klärschlammes eingeschmolzen und somit ohne Gefahr für die Umwelt deponiefähig.

**Patentansprüche**

1. Verfahren zur Aufarbeitung schwermetallhältiger Rückstände (14) der chemischen Industrie, insbesondere von Hydrierrückständen, dadurch gekennzeichnet, daß die schwermetallhältigen Rückstände in eine Primärgasreaktionszone (5) eines mindestens ein Festbett (8) aus kohlenstoffhältigem Material (6) enthaltenden Schachtvergasers (1) eingebracht werden, daß zusammen mit den Einsatzstoffen (14, 15, 16) und/oder zusammen mit den Festbettbildnern (6) schlackenbildende Stoffe zur Aufnahme und Abbindung der Schwermetalle eingebracht werden, und daß die untere Zone (10) des Festbettes (8) auf eine Temperatur oberhalb der Schlacken- bzw. Ascheschmelztemperatur gehalten wird, wobei die Viskosität der Schlacke (21) weniger als 10 Pa.s beträgt.

2. Verfahren nach Anspruch 1, dadurch gekennzeichnet, daß für die Aufarbeitung vanadinhältiger Rückstände zusätzlich basische schlackenbildende Stoffe, insbesondere CaO-hältige Stoffe, in die Sekundärgasreaktionszone (3) des Schachtvergasers (1) eingebracht werden.

3. Verfahrern nach Anspruch 1, dadurch gekennzeichnet, daß für die Aufarbeitung von eisenhältigen Rückständen in die Sekundärgasreaktionszone (3) Koks, insbesondere Hüttenkoks, eingebracht wird, wobei eine saure Schlacke mit mindestens 40 % $SiO_2$ gebildet wird.

4. Verfahren nach den Ansprüchen 1 bis 3, dadurch gekennzeichnet, daß zur Herabsetzung der Rußbildung in der Primärgasreaktionszone (5) eine oder mehrere der folgenden Maßnahmen angewendet werden:

a) Zuführung eines sauerstoffhältigen Gases, um ein $C/O_2$-Verhältnis, gleich $\lambda$,von mindestens 0,45 bis 0,8, vorzugsweise 0,6, zu erhalten;

b) Einstellen eines Wasserstoff/Sauerstoff-Verhältnisses von mindestens 0,35 bis 0,7, vorzugsweise 0,5;

c) Einstellen der Verweilzeit des Primärgases in der Primärgasreaktionszone von 0,2 bis 1,5 sec, vorzugsweise 0,4 bis 0,6 sec und

d) Einstellen einer Verweilzeit des Sekundärgases in der Sekundärgasreaktionszone von 1 bis 6 sec, vorzugsweise 2 bis 3 sec.

5. Verfahren nach den Ansprüchen 1 bis 4, dadurch gekennzeichnet, daß die schlackenbildenden Zusatzstoffe, wie Kalkstein, in einer Körnung bis zu 20 mm verwendet werden.

6. Verfahren nach den Ansprüchen 1 bis 5, dadurch gekennzeichnet, daß das aus dem Schachtvergaser (1) austretende Produktgas (18) gefiltert und der ausgefilterte Staub (20) der Primärgasreaktionszone (5) zugeführt wird.

7. Verfahren nach den Ansprüchen 1 bis 6, dadurch gekennzeichnet, daß als Einsatzstoff zusätzlich zu den schwermetallhältigen Rückständen (14) Klärschlamm (23) der Primärgasreaktionszone (5) zugeführt wird.

8. Verfahren nach Anspruch 7, dadurch gekennzeichnet, daß Klärschlamm (23) in einer Menge von bis zu 30 % der Menge der schwermetallhältigen Rückstände (14) zugeführt wird.

9. Verfahren nach Anspruch 7 oder 8, dadurch gekennzeichnet, daß der Klärschlamm (23) dem schwermetallhältigen Rückstand (14) vor dessen Einspeisung zugemischt wird.

10. Verfahren nach den Ansprüchen 7 bis 9, dadurch gekennzeichnet, daß der Klärschlamm (23) vor dem Einspeisen auf eine Restfeuchte von maximal 50 bis 60 % getrocknet wird.

**Claims**

1. Method for working up heavy-metal-containing residues (14) from the chemical industry, in particular hydrogenation residues, characterised in that the heavy- metal-containing residues are introduced into a primary- gas reaction zone (5) of a shaft gasifier (1) containing at least one static bed (8) of carbon-containing material (6), that, together with the charge substances (14, 15, 16) and/or together with the static-bed formers (6), slag-forming substances are introduced to take up and bind the heavy metals, and that the lower zone (10) of the static bed (8) is maintained at a temperature above the slag and ash melting temperatures, the viscosity of the slag (21) being less than 10 Pa.s.

2. Method according to claim 1, characterised in that, for working up vanadium-containing residues, basic slag formers, in particular CaO-containing substances, are additionally introduced into the secondary-gas reaction zone (3) of the shaft gasifier (1).

3. Method according to claim 1, characterised in that, for working up ferrous residues, coke, in particular metallurgical coke, is introduced into the secondary-gas reaction zone (3), an acidic slag containing at least 40 % $SiO_2$ being formed.

4. Method according to claims 1 to 3, characterised in that, for reducing the formation of soot in the primary-gas reaction zone (5) one or more of the following measures are applied:

a) Supply of an oxygen-containing gas in order to achieve a $C/O_2$ ratio, equal to $\lambda$, of at least 0.45 to 0.8, preferably 0.6;

b) adjustment of a hydrogen/oxygen ratio of at least 0.35 to 0.7, preferably 0.5;

c) adjustment of the dwell time of the primary gas in the primary-gas reaction zone of from 0.2 to 1.5 s, preferably 0.4 to 0.6 s; and

d) adjustment of a dwell time of the secondary gas in the secondary-gas reaction zone of from 1 to 6 s, preferably 2 to 3 s.

5. Method according to claims 1 to 4, characterised in that the slag-forming additives, such as limestone, are used at a granulation of up to 20 mm.

6. Method according to claims 1 to 5, characterised in that the product gas (18) leaving the shaft gasifier (1) is filtered and the filtered dust (20) is supplied to the primary-gas reaction zone (5).

7. Method according to claims 1 to 6, characterised in that sewage sludge (23) is supplied to the primary-gas reaction zone (5) as a charge substance in addition to the heavy-metal-containing residues (14).

8. Method according to claim 7, characterised in that sewage sludge (23) is supplied in an amount of up to 30 % of the amount of heavy-metal-containing residues (14).

9. Method according to claim 7 or 8, characterised in that the sewage sludge (23) is admixed to the heavy-metal- containing residue (14) prior to the feeding thereof.

10. Method according to claims 7 to 9, characterised in that the sewage sludge (23) is dried to a residual moisture of 50 to 60 % at the most prior to its feeding.

**Revendications**

1. Procédé pour le traitement de résidus contenant des métaux lourds (14) de l'industrie chimique, en particulier de résidus d'hydrogénation, caractérisé en ce que les résidus contenant des métaux lourds sont introduits dans une zone de réaction de gaz primaire (5) d'un gazéificateur à puits (1) contenant au moins un lit fixe (8) en matière carbonée (6), en ce que des substances scorifiantes pour l'absorption et la fixation des métaux lourds sont introduites avec les matières chargées (14, 15, 16) et/ou avec les constituants du lit fixe (6), et en ce que la zone inférieure (10) du lit fixe (8) est maintenue à une température supérieure à la température de fusion de la scorie ou de la cendre, la viscosité de la scorie (21) étant inférieure à 10 Pa.s.

2. Procédé selon la revendication 1, caractérisé en ce que, pour le traitement de résidus contenant du vanadium, on introduit en outre des substances scorifiantes basiques, en particulier des substances contenant CaO, dans la zone de réaction de gaz secondaire (3) du gazéificateur à puits (1).

3. Procédé selon la revendication 1, caractérisé en ce que pour le traitement de résidus contenant du fer, on introduit dans la zone de réaction de gaz secondaire (3) du coke, en particulier du coke sidérurgique, en formant ainsi une scorie acide à au moins 40 % de $SiO_2$.

4. Procédé selon les revendications 1 à 3, caractérisé en ce que, pour l'abaissement de la formation de noir de fumée dans la zone de réaction de gaz primaire (5), on applique une ou plusieurs des mesures suivantes:

a) introduction d'un gaz contenant de l'oxygène, pour obtenir un rapport $C/O_2$, égal à $\lambda$, d'au moins 0,45 à 0,8, de préférence 0,6;

b) réglage d'un rapport hydrogène/oxygène d'au moins 0,35 à 0,7, de préférence 0,5;

c) réglage du temps de passage du gaz primaire dans la zone de réaction de gaz primaire de 0,2 à 1,5 s, de préférence 0,4 à 0,6 s; et

d) réglage d'un temps de passage du gaz secondaire dans la zone de réaction de gaz secondaire de 1 à 6 s, de préférence 2 à 3 s.

5. Procédé selon les revendications 1 à 4, caractérisé en ce que l'on utilise les additifs scorifiants, tels que le calcaire, à une granulométrie allant jusqu'à 20 mm.

6. Procédé selon les revendications 1 à 5, caractérisé en ce que le produit gazeux (18) sortant du gazéificateur à puits (1) est filtré et la poussière (20) séparée par filtration est envoyée à la zone de réaction de gaz primaire (5).

7. Procédé selon les revendications 1 à 6, caractérisé en ce que l'on envoie comme matière chargée à la zone de réaction de gaz primaire (5) de la boue de clarification (23) en plus des résidus contenant des métaux lourds (14).

8. Procédé selon la revendication 7, caractérisé en ce que l'on envoie de la boue de clarification (23) en quantité allant jusqu'à 30 % de la quantité des résidus contenant des métaux lourds (14).

9. Procédé selon la revendication 7 ou 8, caractérisé en ce que la boue de clarification (23) est mélangée avec le résidu contenant des métaux lourds (14) avant son introduction.

10. Procédé selon les revendications 7 à 9, caractérisé en ce que la boue de clarification (23) est séchée avant l'introduction à une humidité résiduelle maximale de 50 à 60 %.

FIG. 1

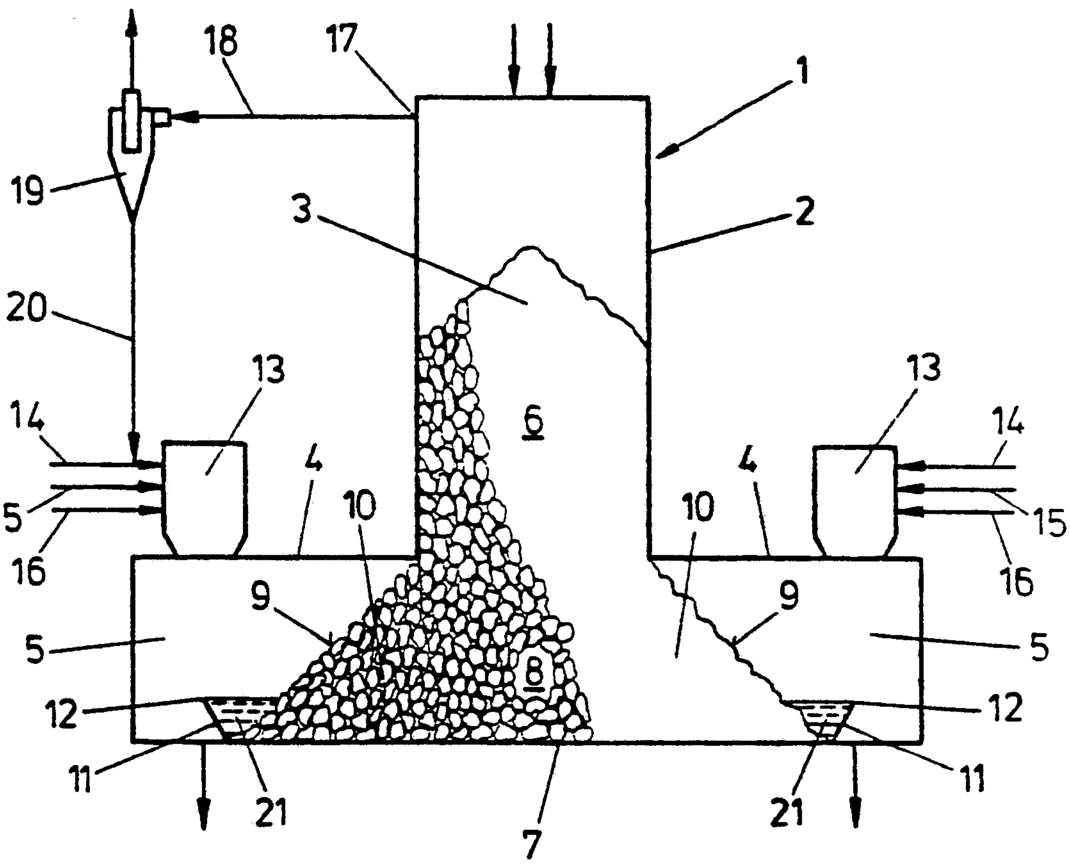

FIG. 2